Europäisches Patentamt

European Patent Office

Office européen des brevets

(19)

(11) Veröffentlichungsnummer: **0 451 470 A2**

## (12) EUROPÄISCHE PATENTANMELDUNG

(21) Anmeldenummer: 91102665.6

(22) Anmeldetag: 23.02.91

(51) Int. Cl.⁵: **F16C 13/00**

(30) Priorität: 12.04.90 DE 4011826

(43) Veröffentlichungstag der Anmeldung:
16.10.91 Patentblatt 91/42

(84) Benannte Vertragsstaaten:
CH DE FR GB IT LI SE

(71) Anmelder: Eduard Küsters Maschinenfabrik
GmbH & Co. KG
Gladbacher Strasse 457
W-4150 Krefeld 1(DE)

(72) Erfinder: Funger, Bernhard
Am Viefershof 22
W-4150 Krefeld 29(DE)
Erfinder: Kubik, Klaus
Homberger Strasse 14
W-4150 Krefeld(DE)

(74) Vertreter: Palgen, Peter, Dr. Dipl.-Phys. et al
Patentanwälte Dipl.-Phys. Dr. Peter Palgen &
Dipl.-Phys. Dr. H. Schumacher
Mulvanystrasse 2
W-4000 Düsseldorf(DE)

(54) Durchbiegungssteuerbare Walze.

(57) Bei einer durchbiegungssteuerbaren Walze mit umlaufender Hohlwalze (1) und feststehendem Querhaupt (3) erfolgt die Abstützung der Hohlwalze (1) durch längs des Querhaupts aufgereihte, gegen den Innenumfang (4) der Hohlwalze (1) wirkende Stützelemente (14'), die durch den Druck in einer Zylinderkammer (39) angepreßt werden und separat davon mit Druckflüssigkeit füllbare Lagertaschen (25) aufweisen. Die Zuleitungen (38,46) zu der Zylinderkammer (39) bzw. den Lagertaschen (25) sind durch eine Verbindungsleitung (45) mit einem Rückschlagventil (16) verbunden, welches bei einem Leitungsbruch die Zylinderkammer (39) sofort entlastet und den Anpreßdruck von dem Stützelement (14') wegnimmt.

FIG. 4

Die Erfindung bezieht sich auf eine durchbiegungssteuerbare Walze der dem Oberbegriff des Anspruchs 1 entsprechenden Art.

Eine solche Walze gehört durch die nicht vorveröffentlichte DE-OS 38 35 152 zum Stand der Technik. Bei der der DE-OS 38 35 152 entsprechenden Ausführungsform sind für die Lagertaschen in dem Stützelement und dessen Kolben/Zylindereinheit separate, parallel arbeitende Pumpen vorhanden. Es besteht hierbei ein gewisses Havarierisiko im Falle eines Leitungsbruches. Wenn nämlich die Zuleitung zu den Lagertaschen aus irgendeinem Grunde undicht wird und die Lagertaschen nicht mehr genügend Druckflüssigkeit erhalten, um einen stützenden Flüssigkeitsfilm am Rande aufzubauen, und wenn gleichzeitig in der Kolben/Zylindereinheit nach wie vor der volle Druck ansteht, wird das Stützelement mit hohem Druck gegen den Innenumfang der Hohlwalze gepreßt, ohne daß dieser Druck über den trennenden Flüssigkeitsfilm übertragen wird. Es kommt zu metallischer Reibung zwischen dem Stützelement und dem Innenumfang der Hohlwalze und zu alsbaldigen Schäden an beiden. Zwar ist in der Zuleitung zu den Lagertaschen bei der Ausführungsform nach der DE-OS 38 35 152 ein Rückschlagventil vorgesehen, so daß bei einem Bruch der Leitung zwischen der zugeordneten Pumpe und dem Rückschlagelement ein sofortiges Zurückströmen der Flüssigkeit aus den Lagertaschen vermieden wird, doch bauen sich der Druck in den Lagertaschen und damit einhergehend auch der Flüssigkeitsfilm an deren Berandung sehr schnell ab und kann das Rückschlagventil nur einen vorübergehenden Schutz bieten, der in bestimmten Situationen nicht ausreicht, wenn der Druck in der Kolben/Zylindereinheit nicht auf andere Weise, z.B. über Drucksensoren gesteuert, schnell genug abgesenkt werden kann.

Aus der EP-A1-252 251 ist eine gattungsgemäße Walze bekannt, die ebenfalls zwei Pumpen aufweist, die indessen nicht parallel arbeiten, sondern gewissermaßen hintereinandergeschaltet sind. Die Pumpe zur Versorgung der Lagertaschen baut einen gewissen Druck auf. Die Pumpe zur Versorgung der Kolben/Zylindereinheit ist an die Druckleitung der ersten Pumpe angeschlossen und hat deren Ausgangsdruck als Eingangsdruck. Bei einem Bruch der Zuleitung zu den Lagertaschen fällt der Druck in der Kolben/Zylindereinheit nicht zwangsläufig schlagartig mit ab und sind somit auch hier gewisse Havarierisiken gegeben.

Der Erfindung liegt die Aufgabe zugrunde, die hydraulische Versorgung einer gattungsgemäßen Walze einfacher und sogleich sicherer zu gestalten.

Diese Aufgabe wird durch die in Anspruch 1 wiedergegebene Erfindung gelöst.

Das Druckverhältnis in den beiden Zuleitungen steht in engem Zusammenhang mit der Schließrichtung des Rückschlagventils. Wenn nämlich der Druck in der Zuleitung zu den Lagertaschen niedriger wäre als der in der Zuleitung zu der Kolben/Zylindereinheit, würde sich das Rückschlagventil öffnen und könnte sich in der Kolben/Zylindereinheit kein ausreichender Druck zum Anpressen des Stützelements ausbilden. Durch die höhere Bemessung des Drucks in der Zuleitung zu den Lagertaschen bleibt das Rückschlagventil jedoch im normalen Betriebszustand geschlossen und öffnet erst, wenn in der Zuleitung zu den Lagertaschen ein Bruch eintritt und der Versorgungsdruck der Lagertaschen abfällt. Wenn die Zuleitung zu der Kolben/Zylindereinheit bricht, so ist dies problemlos, weil dann ja der Anpreßdruck entfällt.

Der Ausdruck "unmittelbar vor der Kolben/Zylindereinheit bzw. den Drosselkanälen" ist nicht geometrisch, sondern hydraulisch gemeint: es sollen sich zwischen den Einmündungsstellen der Verbindungsleitung und der Zylinderkammer der Kolben/Zylindereinheit bzw. den Drosselkanälen keine die Strömung drosselnden hydraulischen Elemente mehr befinden, die den raschen Abfall des Druckes verzögern könnten.

Durch das Rückschlagventil im Verein mit der Druckbemessung ergibt sich mit relativ einfachen Mitteln eine Gesamtanordnung, die gegen Leitungsbruch an einer beliebigen Stelle so gesichert ist, daß keine Havarie durch Fressen der Stützelemente am Innenumfang der Hohlwalze eintreten kann.

Die Lagertaschen und die Zylinderkammer der Kolben/Zylindereinheit haben Wirkflächen des hydraulischen Drucks, die in einem bestimmten Verhältnis zueinander stehen. Um zu einer funktionsfähigen Anordnung zu kommen, gibt es entsprechende Bedingungen für die Drücke.

Die Wirkfläche der Lagertaschen ist im allgemeinen etwas größer als die der Kolben/Zylindereinheit, so daß im Gleichgewichtszustand der Druck in den Lagertaschen etwas niedriger zu sein hat als der in der Kolben/Zylindereinheit. Um nun zu dem erfindungsgemäß höheren Druck in der Zuleitung zu den Lagertaschen zu kommen, bedarf es einer entsprechend starken Drosselung in den Drosselkanälen. Diese kann beispielsweise durch Einsetzen einer entsprechenden Blende erreicht werden, die gegenüber Drosselbohrungen den Vorzug der Unabhängigkeit von der Viskosität der Druckflüssigkeit aufweist.

Eine erste in Betracht kommende Ausführungsform der Erfindung ist Gegenstand des Anspruchs 2.

Durch die Vorsehung nur einer Pumpe verringern sich der bauliche und der mit der Pumpensteuerung einhergehende Aufwand bedeutend. Die beiden Zuleitungen gehen nunmehr von einem gemeinsamen Druckanschluß an der Pumpe bzw. an einer gemeinsamen Druckleitung aus. Der Druck in der Zuleitung zu der Kolben/Zylindereinheit wird durch das Druckminderventil steuerbar reduziert, um eine Änderung der Anpreßkraft und damit der von dem Stützelement insgesamt ausgeübten Kraft zu erreichen. Die Pumpe liefert unabhängig davon stets einen gleichmäßigen Mengenstrom, so daß die Temperaturverhältnisse an der Walze nicht druckabhängig sind.

Ein Druckminderventil bedarf zu einer einwandfreien Funktion eines gewissen kleinen Volumenstroms. Sollte die aus der Zylinderkammer austretende Leckströmung hierzu nicht ausreichen, empfiehlt sich ein Hilfskanal gemäß Anspruch 3, der eine ständige geringfügige Abströmung aus der Zylinderkammer und damit den erforderlichen Volumenstrom sicherstellt, ohne die Druckausbildung in der Zylinderkammer nennenswert zu beeinflussen.

Eine weitere in Betracht kommende Ausführungsform der Erfindung ist Gegenstand des Anspruchs 4. Es sind hier zwei Pumpen vorhanden, die separat steuerbar sind, so daß auf diese Weise das gewünschte Druckverhältnis eingestellt werden kann. Auch bei dieser Ausführungsform funktioniert die Anordnung des Rückschlagventils als Sicherheitseinrichtung in der gleichen Weise.

Um mit Sicherheit zu einer einwandfreien Funktion des Rückschlagventils zu kommen, empfiehlt sich die Druckbemessung nach Anspruch 5.

In der Zeichnung sind Ausführungsformen der Erfindung schematisch dargestellt.

Fig. 1 zeigt eine Ansicht eines Walzenpaars, bei welchem die erfindungsgemäße Walze Unterwalze ist;

Fig. 2 und 3 zeigen durch die Achse der Walze gehende Längsschnitte zweier Ausführungsformen eines einzelnen Stützelements;

Fig. 4 und 5 zeigen schematisch verschiedene Ausführungsformen der Druckflüssigkeitsversorgung der Stützelemente;

Fig. 6 zeigt die Ansicht eines Stützelements vom Innenumfang der Hohlwalze her.

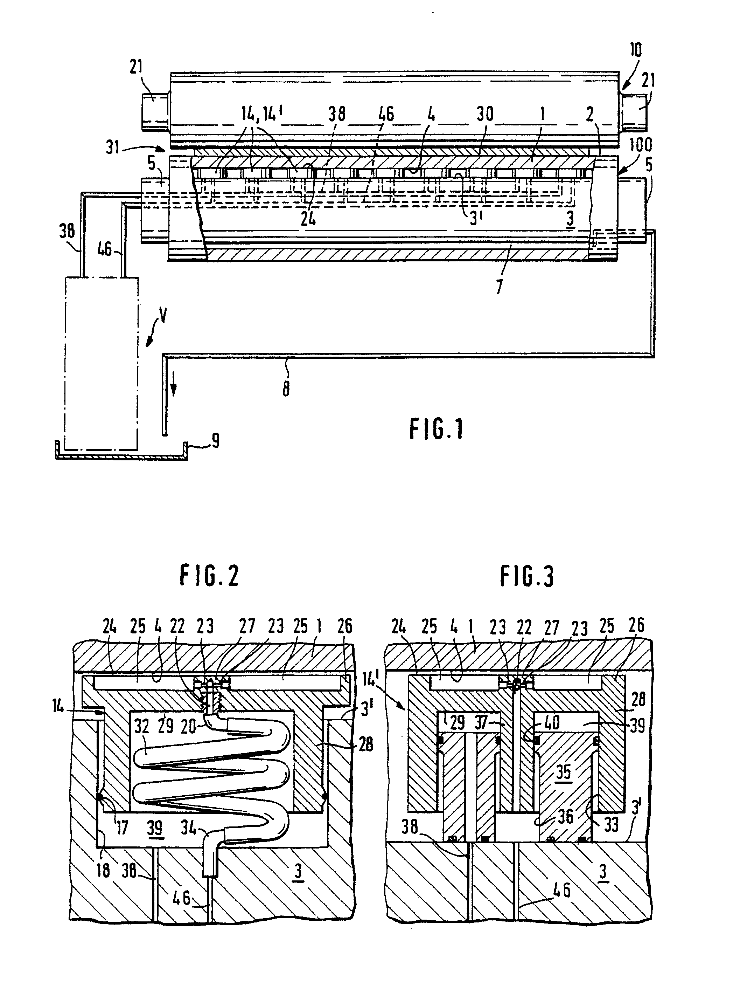

Das in Fig. 1 dargestellte Walzenpaar umfaßt eine Oberwalze 10 und eine Unterwalze 100, zwischen denen eine Warenbahn 30 einer Druckbehandlung in dem walzspalt 31 ausgesetzt wird. Die Oberwalze 10 ist eine konventionelle massive Walze. Die Unterwalze 100 hingegen umfaßt eine umlaufende Hohlwalze 1, deren Außenumfang 2 den arbeitenden Walzenumfang bildet und die der Länge nach von einem undrehbaren Querhaupt 3 durchgriffen ist, welches allseitig Abstand zum Innenumfang 4 der Hohlwalze 1 beläßt, so daß es sich innerhalb der Hohlwalze 1 verlagern kann, ohne mit dem Innenumfang 4 in Berührung zu kommen. Die Hohlwalze 1 kann an den Enden auf nicht dargestellten Lagern auf dem Querhaupt 3 abgestützt sein. In diesem Fall betrifft die Verlagerung nur die Durchbiegung des Querhauptes 3 im Innern der Hohlwalze 1. Die Hohlwalze 1 kann aber in einer alternativen Ausführungsform, die auch als eine solche mit "innerem Hub" bezeichnet wird, sich als Ganzes in der Wirkebene gegenüber dem Querhaupt 3 verlagern. Die Hohlwalze 1 ist in diesem Fall nicht über die Lager auf dem Querhaupt abgestützt, sondern nur in der Wirkebene geführt. Die Verlagerung betrifft hierbei die Verlagerung in der Führung, der sich die Durchbiegung überlagert.

Die Zapfen 21 der Oberwalze 10 sowie die aus der Hohlwalze 1 an deren Enden vorstehenden Enden 5 des Querhauptes 3 sind im nicht dargestellten Walzenständer abgestützt.

Auf der gegen den Walzspalt 31 gerichteten Oberseite 3' des Querhauptes 3 sind über die Länge der Hohlwalze verteilt mehrere, in dem dargestellten Ausführungsbeispiel neun, hydraulische Stützelemente 14,14' angeordnet, die mit ihrer dem Außenumfang 4 der Hohlwalze 1 in der Gestalt angepaßten Anlagefläche 24 am Innenumfang 4 der Hohlwalze 1 anliegen. In den Fig. 2 und 3 sind zwei in Betracht kommende Ausführungsformen 14,14' der Stützelemente erläutert.

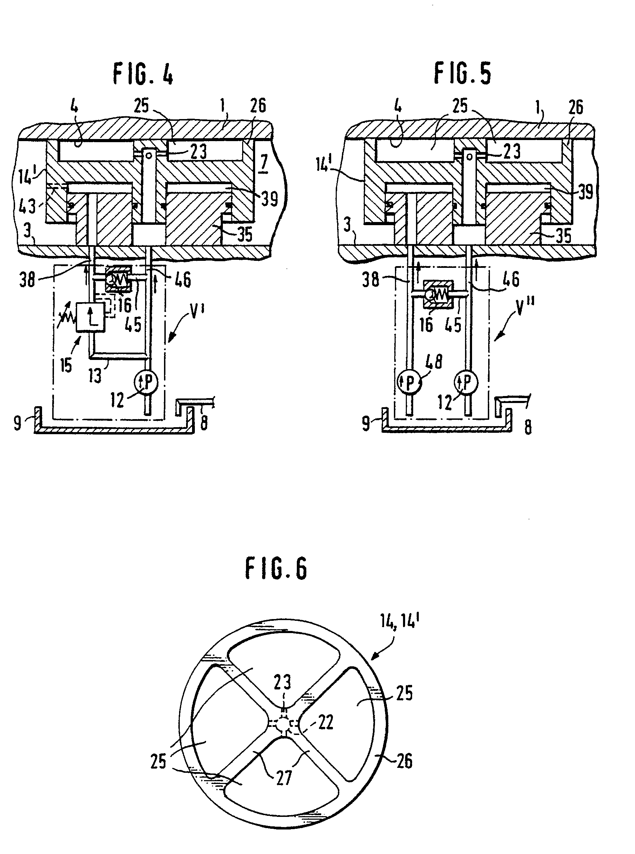

In der Anlagefläche 24 sind flache Lagertaschen 25 (Fig. 2) ausgebildet, die einen wesentlichen Teil der Anlagefläche 24 einnehmen, so daß von ihr nur berandende Stege übrigbleiben. In den Ausführungsbeispielen ist das Stützelement 14 im Querschnitt kreisrund, es kann aber auch quadratisch oder rechteckig sein. Die Anlagefläche 24 weist einen um den ganzen Umfang herumgehenden Randsteg 26 sowie zwei sich kreuzende Mittelstege 27 auf, so daß vier segmentförmige Lagertaschen 25 gebildet sind (Fig. 6).

Das Stützelement 14 umfaßt ein etwa topfförmiges Gehäuse 28, welches mit der offenen Seite dem Querhaupt 3 zugewandt ist und einen Boden 29 aufweist, an dessen "Unterseite", die allerdings in der Zeichnung oben, d.h. gegen den Walzspalt 31 hin, gelegen ist, die Lagertaschen 25 vorgesehen sind. In der Nähe des unten gelegenen "Randes" des Topfes ist außen eine Umfangsdichtung 17 vorgesehen, mit der das topfförmige Gehäuse 28 in einer als radiale Sackbohrung ausgebildeten Zylinderbohrung 18 des Querhauptes dichtend geführt ist. Das Gehäuse 28 und die Zylinderbohrung 18 bilden eine Kolben/Zylindereinheit, unter deren Wirkung das Stützelement 14 gegen den Innenumfang 4 der Hohlwalze 1 drückbar ist. Die Zylinderbohrung 18 bildet mit dem topfförmigen Gehäuse 28 einen Zylinderraum 39, der über eine im Querhaupt 3 verlaufende Zuleitung 38 von außerhalb der Walze mit Druckflüssigkeit versorgt werden kann, ansonsten aber geschlossen sit.

In der Mitte des Bodens 29 im Bereich des Mittelsteges 27 ist ein abgewinkelter Schlauchstutzen 20 angebracht, der in eine auf der Achse des Stützelements 14 liegende Bohrung 22 einmündet, von der Drosselkanäle 23 in die beiden Lagertaschen 25 ausgehen. Die Drosselkanäle 23 enthalten Blenden, die einen kräftigen Drosseleffekt herbeiführen, dabei aber, anders als lange Drosselbohrungen, im wesentlichen unabhängig von der Viskosität, d.h. der Temperatur, arbeiten. Auf den Schlauchstutzen 20 ist ein Schlauch 32 aufgeschoben, der sich in einigen Windungen im Innern des topfförmigen Gehäuses 28 erstreckt und in einen Schlauchstutzen 34 am Boden der Zylinderbohrung 18 mündet, der mit einer Zuleitung 46 im Querhaupt 3 in Verbindung steht. Die durch die Zuleitung 46 zugeführte Druckflüssigkeit tritt über die Drosselbohrungen 23 in die Lagertaschen 25 aus. Von dort strömt sie über die Berandung 26, die einen Teil der Anlagefläche 24 bildet, nach außen ab. In dem der Berandung 26 entsprechenden Teil der Anlagefläche 24 besteht also ein stabiler Flüssigkeitsfilm, auf dem sich das Stützelement 14 am Innenumfang 4 der Hohlwalze 1 abstützt.

Der Schlauch 32 stellt einen beweglichen Teil der Zuleitung 46 dar, mit welcher die Druckflüssigkeit aus dem Querhaupt 3 in die Lagertaschen 25 des sich gegenüber dem Querhaupt 3 radial verlagernden Stützelements 14 gebracht werden kann.

Soweit die Teile des Stützelements 14' der der Ausführrungsform nach Fig. 3 denen des Stützelements 14 der Fig. 2 entsprechen, sind die Bezugszahlen gleich.

Das topfförmige Gehäuse 28 ist hierbei nicht an seiner Außenseite in einer Zylinderbohrung 18 des Querhauptes 3 geführt, sondern an seiner Innenseite an einem auf die Oberseite 3' des Querhauptes 3 aufgesetzten Ringkolben 35, der mit dem zylindrischen Innenumfang 33 des topfförmigen Gehäuses 28 zusammenwirkt und die Kolben/Zylindereinheit bildet. Die Zylinderkammer 39, unter deren Druck das Stützelement 14' gegen den Innenumfang 4 der Hohlwalze 1 gepreßt wird, befindet sich in diesem Fall zwischen der Oberseite des Kolbens 35 und dem Boden 29. Der Kolben 35 hat eine zentrale Bohrung 36, die mit der Zuleitung 46 in Verbindung steht und in die ein rohrförmiger Ansatz 37 des Bodens 29 mittels einer Dichtung 40 abgedichtet eintaucht. Der rohrförmige Ansatz 37 in der Bohrung 36 bildet eine Art zusätzlicher Kolben/Zylindereinheit und enthält die zu den Drosselkanälen 23 führende Bohrung 22. Das Stützelement 14' kann sich gegenüber dem auf der Oberseite 3' befindlichen Kolben 35 in der gleichen Weise radial bewegen wie das Stützelement 14 in der Zylinderbohrung 18. Die Zylinderkammer 39 ist durch das Vorhandensein des Ansatzes ringförmig ausgebildet.

Die Versorgung der Stützelemente 14,14' mit Druckflüssigkeit erfolgt über eine Druckflüssigkeitsversorgungseinheit V (Fig. 1), von der zwei Ausführungsformen V' und V'' in den Fig. 4 und 5 dargestellt sind. Die Versorgungseinheit V führt über die Zuleitungen 38 und 46 den Stützelementen 14,14' Druckflüssigkeit zu. Der Druck in der Zuleitung 38 ist steuerbar und bildet den hydrostatischen Druck in der Zylinderkammer 39, unter dessen Wirkung das Stützelement 14,14' gegen den Innenumfang 4 der Hohlwalze 1 angepreßt wird. Dadurch wiederum wird der Abströmwiderstand aus den Lagertaschen 25 bestimmt. Wenn dann über die Zuleitung 48 den Lagertaschen 25 eine zeitlich konstante Menge an Druckflüssigkeit zugeführt wird, so steigt zunächst der Druck in den Lagertaschen 25 an, bis die Hohlwalze 1 etwas von deren Randsteg 26 abhebt und sich die Druckflüssigkeit dazwischen einen Weg bahnen kann. Dadurch fällt der Druck in den Lagertaschen 25 (wegen der Drosselung in den Kanälen 23) wieder ab, und es bildet sich bei einem bestimmten sich von selbst einstellenden Druck in den Lagertaschen 25 ein Gleichgewicht aus, bei welchem der Spalt zwischen dem Randsteg 26 und dem Innenumfang 4 der Hohlwalze 1 eine bestimmte Größe hat und die zugeführte Druckflüssigkeit in pro Zeiteinheit gleichbleibender Menge abströmt und bei entsprechender Temperierung auch gleichbleibende Wärmemengen mit der Hohlwalze 1 austauscht.

In Fig. 1 sind alle Stützelemente parallelgeschaltet und werden mit den gleichen Drücken beaufschlagt. Zur Beeinflussung des Liniendrucks werden jedoch normalerweise Gruppen von Stützelementen 14,14' oder sogar jedem einzelnen dieser Stützelemente 14,14' separate Drücke zugeführt. Die Zuleitungen 38 und 46 sind demnach nur symbolisch als eine einzige Leitung dargestellt, können aber in der Praxis auch aus mehreren zu einzelnen Gruppen von Stützelementen oder einzelnen Stützelementen hinführenden Leitungen bestehen, denen in der Versorgungseinheit V unterschiedliche Drücke aufgeprägt werden.

Die den einzelnen Stützelementen 14,14' zugeführte Druckflüssigkeit tritt über den Randsteg 26 der Stützelemente 14,14' in den Zwischenraum 7 zwischen Querhaupt 3 und Innenumfang 4 der Hohlwalze 1 aus und wird daraus über die Leitung 8 abgesaugt und in den Vorratsbehälter 9 zurückgeführt.

In den Fig. 4 und 5 sind zwei Ausführungsformen der in Fig. 1 nur angedeuteten Versorgungseinheit V mehr im einzelnen dargestellt. Soweit funktionell einander entsprechende Teile vorhanden sind, sind die Bezugszahlen gleich geblieben.

Bei der Versorgungseinheit V' nach Fig. 4 ist eine einzige mengengeregelte Pumpe 12 vorgesehen, die also bei allen Drücken eine pro Zeiteinheit gleichmäßige Menge an Druckflüssigkeit liefert. In dem Ausführungsbeispiel ist die Zuleitung 46 unmittelbar an die Pumpe 12 angeschlossen und enthält keine weiteren strömungsbeeinflussenden Elemente. Von der Zuleitung 46 führt eine Zweigleitung 13 zu einem Druckminderventil 15, an das die Zuleitung 38 angeschlossen ist, die die Zylinderkammer 39 versorgt. Das Druckminderventil 15 setzt den Druck in der auf der Druckseite der Pumpe 12 angeschlossenen Leitung 46 in einem bestimmten verstellbaren Verhältnis herab und beaufschlagt damit im wesentlichen hydrostatisch die Zylinderkammer 39. Das Druckminderventil benötigt zu seiner Funktion einen geringen Volumenstrom an durchgesetzter Flüssigkeit, der durch die Leckage an dem Kolben 35 oder durch einen eigens vorgesehenen, gestrichelt angedeuteten Hilfskanal in Gestalt einer Drosselbohrung 43 gewährleistet sein kann, die aus der Zylinderkammer 39 in den Zwischenraum 7 zwischen Querhaupt 3 und Hohlwalze 1 führt.

Die Zuleitungen 38 und 46 sind durch eine Verbindungsleitung 45 verbunden, die zwischen dem Druckminderventil 15 und dem Ringkolben 35 in die Zuleitung 38 einmündet. In der Verbindungsleitung 45 ist ein Rückschlagventil 16 angeordnet, welches gegen die Zuleitung 38 sperrt.

Es ist dafür gesorgt, daß im Normalbetrieb der Druck in der Zuleitung 46 stets größer als in der Zuleitung 38 ist. Das kann durch entsprechende Bemessung der Blenden in den Drosselkanälen 23 erreicht werden. Das Rückschlagventil 16 bleibt daher im Normalbetrieb geschlossen.

Bricht jedoch die Zuleitung 46 (oder die Pumpe 12), so fällt der Druck sofort ab und wird niedriger als der im Moment noch in voller Höhe anstehende Druck in der Zuleitung 38. Dadurch öffnet das Rückschlagventil 16. Dadurch ist auch "hinter" dem Druckminderventil 15 kein Druck mehr vorhanden. Ein Anpressen des Stützelements 14' an den Innenumfang 4 der Hohlwalze 1 unter hohem Druck bei drucklosen Lagertaschen 25 wird so vermieden. Bei einem Bruch in der Zweigleitung 13 ist die Situation dieselbe wie bei einem Bruch der Zuleitung 46. Bei einem Bruch in der Leitung 38 entfällt die Anpreßkraft und kann kein Schaden entstehen.

Bei der Versorgungseinheit V'' nach Fig. 5 ist wiederum eine mengengeregelte Pumpe 12 vorhanden, wobei aber diesmal die Zuleitung 38 eine eigene separat steuerbare Pumpe 48 aufweist. Die Zuleitung 38 führt direkt von der Pumpe 48 in die Zylinderkammer 39 und enthält keine weiteren strömungsbeeinflussenden Elemente, ebenso wie die Zuleitung 46. Die Zuleitungen 38,46 sind durch eine Verbindungsleitung 45 mit gegen die Zuleitung 38 sperrendem Rückschlagventil 16 verbunden. Bei einem Bruch der Zuleitungen 46 bzw. 38 ergibt sich die gleiche Sicherheitsfunktion wie bei der Ausführung nach Fig. 4, d.h. das Stützelement 14' kann nicht ohne Lagertaschendruck gegen den Innenumfang 4 der Hohlwalze 1 angepreßt werden.

**Patentansprüche**

1. Durchbiegungssteuerbare Walze (100),
   mit einer den arbeitenden Walzenumfang (2) bildenden umlaufenden Hohlwalze (1) und einem diese der Länge nach durchgreifenden, rundum Abstand vom Innenumfang (4) der Hohlwalze (1) belassenden undrehbaren Querhaupt (3),
   mit mehreren längs des Querhauptes (3) aufgereihten, an dem Querhaupt (3) radial unter dem Druck einer Druckflüssigkeit in mindestens einer Kolben/Zylindereinheit (28,18/35,28) verlagerbaren hydrostatischen Stützelementen (14,14'), welche in ihrer am Innenumfang (4) der Hohlwalze (1) zur Anlage bringbaren Anlagefläche (24) ringsum berandete Lagertaschen (25) aufweisen,
   mit einer Zuleitung (38) zu der Zylinderkammer (39) der Kolben/Zylindereinheit jedes Stützelements (14,14'),
   mit einer Zuleitung (46) zu jedem Stützelement (14,14'), die über Drosselkanäle (23) an die Lagertaschen (25) angeschlossen ist,
   und mit einer Versorgungseinheit (V) zur Beaufschlagung der Zuleitungen (38,46) mit Druckflüssigkeit,

   dadurch gekennzeichnet,

   daß der Druck in der Zuleitung (46) zu dem jeweiligen Stützelement (14,14') höher als der Druck in der Zuleitung (38) zu der Zylinderkammer (39) und zwischen den Zuleitungen (38,46) unmittelbar vor der Kolben/Zylindereinheit bzw. den Drosselkanälen (23) eine Verbindungsleitung (45) mit einem in Richtung auf die Zuleitung (38) sperrenden Rückschlagventil (16) angeordnet ist.

2. Walze nach Anspruch 1,

   dadurch gekennzeichnet,

   daß die Versorgungseinheit (V') nur eine einzige Pumpe umfaßt, an die beide Zuleitungen (38,46) angeschlossen sind,
   daß die Pumpe (12) eine mengengeregelte Pumpe ist
   und daß in der Zuleitung (38) zu der Zylinderkammer (39) ein Druckminderventil (15) angeordnet ist.

3. Walze nach Anspruch 2, dadurch gekennzeichnet, daß in dem Stützelement (14,14') ein drosselnder Hilfskanal (43) vorgesehen ist, der von der Zylinderkammer (39) ausgeht und in den Zwischenraum (7) zwischen Querhaupt (3) und Innenumfang (4) der Hohlwalze (1) mündet.

4. Walze nach Anspruch 1, dadurch gekennzeichnet, daß die Versorgungseinheit (V") zwei Pumpen (48,12) umfaßt, die an die Leitungen (38 bzw. 46) angeschlossen und separat steuerbar sind.

5. Walze nach einem der Ansprüche 1 bis 4, dadurch gekennzeichnet, daß der Druck in der Leitung (46) mindestens das Doppelte des Drucks in der Zylinderkammer (39) beträgt.

FIG.1

FIG.2

FIG.3

## FIG. 4

## FIG. 5

## FIG. 6